# EUROPÄISCHE PATENTSCHRIFT

(11) **EP 0 617 869 B1**
(45) Veröffentlichungstag und Bekanntmachung des Hinweises auf die Patenterteilung: **12.03.1997**
(21) Anmeldenummer: 93901033.6
(22) Anmeldetag: 16.12.1992
(51) Int. Cl.: H04M 1/72, H04M 1/02

(54) **DRAHTLOSES MODULARES TELEFON FÜR VERSCHIEDENE ANWENDUNGEN**
MULTI-PURPOSE MODULAR CORDLESS TELEPHONE
TELEPHONE MODULAIRE SANS FIL POUR APPLICATIONS DIVERSES

(30) Priorität: 16.12.1991 DE 9115551 U; 16.12.1991 DE 4141382
(43) Veröffentlichungstag der Anmeldung: 05.10.1994
(73) Patentinhaber: Baur, Albert, 86845 Grossaitingen (DE)
(72) Erfinder: Baur, Albert, 86845 Grossaitingen (DE)
(74) Vertreter: Fiener, Josef
(86) Internationale Anmeldenummer: EP9202922
(87) Internationale Veröffentlichungsnummer: WO9312604

(56) Entgegenhaltungen:
- EP-A- 0 344 988
- DE-A- 2 727 335
- DE-A- 4 017 690
- DE-U- 9 001 293
- GB-A- 2 184 308
- US-A- 4 481 382
- US-A- 4 661 659
- SPEECH TECHNOLOGY Bd. 4, Nr. 3, September 1988, NEW YORK Seiten 90 - 93 RUNGE 'THE PTVC-756 : A PORTABLE TRANSACTION VOICE COMPUTER'
- NEC RESEARCH & DEVELOPMENT, SPECIAL ISSUE ON C&C OFFICE SYSTEM 1985, TOKYO Seiten 65 - 72 NAKAMURA ET AL 'MOBILE WORKSTATION'
- SPEECH TECHNOLOGY Bd. 4, Nr. 3, September 1988, NEW YORK Seiten 90 - 93 RUNGE 'THE PTVC-756 : A PORTABLE TRANSACTION VOICE COMPUTER'

## Beschreibung

Die Erfindung betrifft ein drahtloses Komforttelefon gemäß dem Oberbegriff des Patentanspruchs 1.

In jüngster Zeit finden drahtlose Telefone immer mehr Verwendung, da sie die Bewegungsfreiheit des Benutzers erheblich steigern bzw. einen sofortigen Zugriff gewähren, wenn der Benutzer das Gerät mit sich trägt. Aus letzterem Grunde ist es jedoch wesentlich, daß das üblicherweise als eine Art Telefonhörer ausgebildete Gerät möglichst leicht und bequem ist und auch sicher in eine Tasche oder an einem Gürtel, usw., ein- bzw. angesteckt werden kann. Hierdurch ergibt sich das Bestreben, selbst die Telefonfunktionen wie Tasten, etc., auf ein Minimum zu beschränken.

Andererseits benötigt der moderne Mensch im Beruf, aber auch in der Freizeit, die verschiedensten Geräte und Instrumente wie Taschenrechner, Diktiergerät, medizinische oder andere Meß- bzw. Aufnahmegeräte, Rundfunkempfänger, usw. Alle diese Geräte sind unabhängig voneinander konzipiert und mit einer eigenen Stromversorgung, wie Batterien oder Akkumulatoren ausgestattet. Ferner eignen sich einige dieser Geräte nur sehr bedingt dafür, bequem und unauffällig überall mitgetragen zu werden.

Aus der DD 294 149 A5 ist bereits ein Apparat für die fernmeldetechnische Kommunikation, insbesondere ein Telefon oder Funkgerät bekannt, das zumindest einen Lautsprecher und ein Mikrofon enthält, wobei eine Diktiergeräte-Einheit, eine Radio-Empfangseinheit, ein Personenruf-Empfänger, ein Gerät zur Fernabfrage von Einrichtungen wie Alarmanlagen, Sensoren, oder ein TV-Gerät baulich in den Telefonhörer integriert und mit diesem elektrisch gekoppelt ist. Dieses vorgeschlagene Telefon bzw. Funkgerät soll insbesondere zur Anfertigung von Protokollen oder zum Mitschnitt von Telefongesprächen dienen. Hierzu wird ein Diktiergerät entweder seitlich in einen Schlitz im Telefonhörer eingeschoben oder als zweite Alternative am Rücken des Telefonhörers festgeklemmt. Dies hat den Nachteil, daß bei der ersten Ausführung der Telefonhörer aufgrund der Abmessungen des Diktiergerätes mit dem Bandlaufwerk sehr voluminös gestaltet ist, so daß das Telefongerät nicht kompakt ist. Dies gilt auch für die zweite Ausführung, wo das Diktiergerät am Rücken des Telefonhörers angeklemmt wird. Hierdurch ist die Halteposition des Telefonhörers relativ unbequem. Zudem sind die Bedienelemente an den seitlichen Schmalseiten angeordnet, so daß diese leicht versehentlich eingeschaltet werden können. Außerdem ergibt sich hierdurch eine schlechte Griffposition.

Weiterhin ist von Nachteil, daß die anzukoppelnden elektronischen Geräte vorwiegend passiver Natur sind, also nur zur Wiedergabe und Aufnahme von Informationen dienen. Eine Verarbeitung von Informationen, die der Benutzer während des Telefongespräches erhält, ist hierbei nicht vorgesehen.

US-A-4 481 382 beschreibt ein drahtloses Telefon mit den Merkmalen des Oberbegriffs des Anspruchs 1. Dieses Telefon bietet keine einfache Erweiterungsmöglichkeiten an, und die Verbindung mit anderen Geräten erfordert erheblichen Aufwand, da es keine bestimmte Vorrichtung zum Anstecken eines weiteren Geräts aufweist.

DE-U-9 001 293 beschreibt ein Telefon mit aufsteckbaren Aufsatz, der aber keine Zusatzfunktionen ermöglicht.

Demzufolge liegt der Erfindung die Aufgabe zugrunde, einem Benutzer des tragbaren Telefons zusätzliche Funktionen zur Verfügung zu stellen, wobei die Benutzung des Telefonhörers nicht beeinträchtigt werden soll, insbesondere der Telefonhörer kompakt und leicht handhabbar sein soll.

Diese Aufgabe wird erfindungsgemäß gelöst durch ein drahtloses Komforttelefon mit den Merkmalen des Patentanspruchs 1.

Bevorzugte Weiterbildungen sind in den Unteransprüchen gekennzeichnet.

Weitere Merkmale und Vorteile des erfindungsgemäßen Komforttelefons ergeben sich aus der nachfolgenden Beschreibung von Ausführungsbeispielen anhand der Zeichnung. Es zeigen:
- Fig. 1: eine perspektivische Draufsicht auf einen Telefonhörer gemäß der Erfindung von vorn;
- Fig. 2: eine Seitenansicht des Telefonhörers nach Fig. 1;
- Fig. 3: eine Rückansicht des erfindungsgemäßen Telefonhörers nach Fig. 1; und
- Fig. 4: eine Perspektivansicht auf ein Zusatzgerät für das drahtlose Telefon.

Der grundsätzliche Gedanke der Erfindung besteht darin, einen drahtlosen Telefonhörer 10 mit den verschiedensten zusätzlichen Funktionen, insbesondere einem Taschenrechner auszustatten.

Gemäß den Figuren weist ein Hörer 10 nach einem im einzelnen dargestellten Ausführungsbeispiel ein Gehäuse 12 auf, in bzw. an dem die üblichen Telefonelemente angeordnet sind, wie Hörmuschel 14, Zifferntastenfeld 16, Funktionstasten 18, Mikrofon 22 und eine Anzeigevorrichtung 24 zur Darstellung der gewählten Telefonnummer.

Nunmehr werden die Elemente der zusätzlichen Funktionen, nämlich die Bauteile für einen kaufmännischen oder technischen Rechner 20 oder sog. Kalkulator innerhalb des Gehäuses 12 integriert. Ein weiteres Merkmal der Erfindung besteht darin, daß die für die Telefonfunktion vorhandenen Elemente 14 - 24 durch Mehrfachbelegung auch für die Rechner-Zusatzfunktionen verwendet werden, wie beispielsweise das Zifferntastenfeld 16 und die Funktionstasten 18 als Bedienvorrichtung zur Zahleneingabe und Funktionseingabe (z. B. Addition, Division) und insbesondere die gemeinsame Stromversorgung.

Die vom Rechner 20 ermittelten Werte werden dann an der Anzeige 24 während des Telefongesprächs angezeigt. Somit kann z. B. ein Kaufmann während des Telefongespräches Rabatte, Kalkulationsprozente usw. berechnen und seinem Verhandlungspartner am Telefon unmittelbar weitergeben.

Eine Alternative dazu besteht darin, an geeigneten Stellen des Gehäuses 12 etwa durch schmale Aussparungen derart Platz zu schaffen, daß Zusatzfunktionselemente, z. B. Speicherkarten, Identifikationskarten noch innerhalb der Konturen des Gehäuses 12 angefügt werden können.

Gemäß einer weiteren bevorzugten Möglichkeit sind für verschiedene Zusatzfunktionselemente modulare Steckeinheiten vorgesehen, die an das Gehäuse 12 an geeigneter Stelle, bevorzugt an der Unterseite angesetzt werden.

Zwei oder alle drei dieser Möglichkeiten lassen sich auch kombiniert anwenden, so daß sich ganz unterschiedliche Ausbaustufen ergeben können, je nachdem, wieviele und welche zusätzlichen Funktionen dem Telefonhörer 10 zugeordnet werden.

In einfachster Basis-Ausführungsform ist, wie beschrieben, dem Hörer 10 ein Rechner 20 zugeordnet, der über die Hörervorderseite 15 oder die Hörerrückseite 17 bedient wird. Gemäß der ersten Alternative werden die Zifferntasten 16 und Funktionstasten 18 des Hörers 10 neben der TelefonnummerEingabe auch für die Durchführung von Rechen funktionen verwendet. Die Ergebnisse können auf einer LCD-Anzeige 24 o. dgl. wiedergegeben werden.

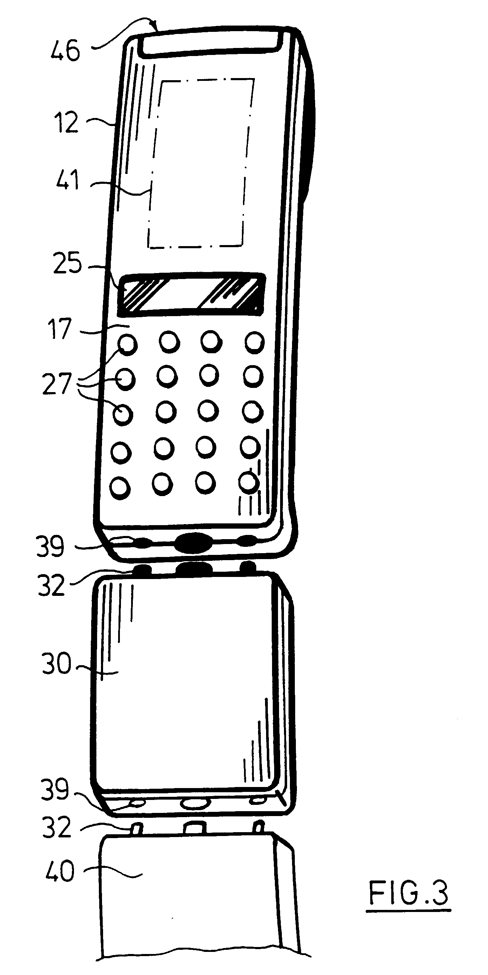

Gemäß der zweiten Alternative ist an der Rückseite 17 des Telefon-Hörers 10 z. B. durch einen Deckel ein Rechner 20 mit druckempfindlichen Tasten 27 in Form einer gedruckten Zusatz-Schaltung eingesetzt oder der Rechner 20 bereits auf der Platine für den Telefonbetrieb vorgesehen. In diesem Falle würde natürlich die Anzeige ebenfalls auf der Rückseite erfolgen, wie dies durch das Anzeigefeld 25 in Fig. 3 angedeutet ist. Hierbei bietet die Rückseite 17 ggfs. mehr Platz für eine Anzeige, so daß diese auf einen LCD-Schirm erweitert werden könnte. Werden die Tasten 27 als Noppen ausgebildet, so erhält man eine besondere Griffigkeit des Telefonhörers 10. Zudem kann ein Bereich der Rückseite 17 mit Solarzellen 41 bestückt sein, wie dies in Strichpunktlinien angedeutet ist.

Weitere Funktionen sind dann möglich, wenn der Hörer 10 mit entsprechenden Speichern ausgestattet wird. Auch hier besteht die Möglichkeit der Integration, etwa von Speicherchips innerhalb des Gehäuses 12, der Einfügung gemäß der zweiten Alternative, etwa ebenfalls in Form von ansteckbaren Chipeinheiten oder aber als motorischer Speicher in Form eines Bandes oder einer CD-Scheibe. Gemäß der bevorzugten Alternative ist eine derartige Informations-Speichervorrichtung als Modul 30 ausgeführt, das sich an den Hörer 10 ansetzen läßt, wobei die elektrische Verbindung über Steckerkontakte 32 erfolgt, die in eine Buchse 39 im Hörer 10 eingesteckt werden (vgl. Fig. 3).

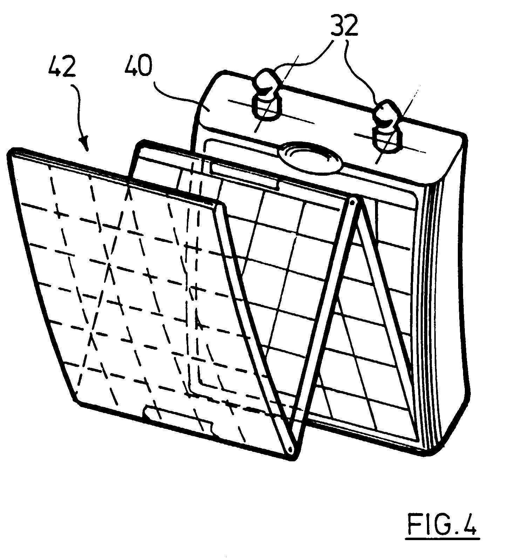

Als Anbringungsposition eignet sich insbesondere die Unterseite des Hörers 10, wobei das Modul 30 zweckmäßigerweise eine longitudinale Fortsetzung des Gehäuses 12 bildet. Ein derartiger Aufbau stört dort am wenigsten, so daß das Modul 30 praktisch immer angesetzt bleiben kann. Analog dazu ist auch ein Anstecken an der Oberkante des Gehäuses 12 möglich. In Art einer Reihen-Schaltung ist es auch möglich, an das Steck-Modul 30 ein weiteres Modul 40 anzustecken, z. B. das in Fig. 4 dargestellte aufklappbare Solarzellen-Modul 42.

Ein Hörer 10 mit derartigen Zusatz-Speichermöglichkeiten in Form eines oder mehrerer Module 30, 40 bietet folgende Anwendungsmöglichkeiten:

Beispielsweise wird der Hörer 10 an ein Daten aufnehmendes bzw. speicherndes und abgebendes Instrument oder Gerät angeschlossen. Beispiele dafür sind medizinische Geräte, wie EKG-, Blutdruck-, Fieber- und ähnliche Meßgeräte, Ultraschall- und andere Geräte. Ähnliches gilt auf technischem oder kaufmännischem Gebiet: Hier können Daten von Überwachungsgeräten, Zählern, wie Energiezählern, Spielautomaten, Verkaufsautomaten, etc., übernommen werden, nachdem vor jeder Speicherung eine entsprechende Identifikation einer Person oder eines Gerätes entweder akustisch oder als Nummer an dem Tastenfeld 16 eingegeben wird. Ist der Hörer erfindungsgemäß mit einer elektronischen Uhr, z. B. einer vollautomatisch sich einstellenden Funkuhr ausgestattet, kann zusätzlich die Eingabezeit einschließlich Datum gespeichert werden. Ob eine analoge oder digitale Speicherung erfolgt, hängt vom jeweiligen Anwendungsfall und der zu erwartenden Datenmenge ab.

Zweckmäßig ist auch eine Terminkalenderfunktion mit entsprechender Zeitzuordnung von Terminen, die in dem Steckmodul 30 z. B. auf mehreren EEPROMs abgespeichert und über den Rechner 20 und die Tasten 16, 18 eingegeben, verändert und gelöscht werden können. Solche Informationen bzw. die Zeit können mit der Anzeige 24 angezeigt werden und ggf. akustisch von der Hörmuschel 14 ein Warnton abgegeben werden.

Als weitere grundsätzliche Zusatz funktion läßt sich der Telefonhörer 10 ohne größeren Aufwand als Datenübertragungsgerät ausgestalten. Dies bedeutet, daß in Abwandlung von der vorgenannten Speicherung über eine übliche Schnittstelle oder Modem die von Geräten oder Instrumenten abgenommenen Meßdaten ggf. nach Verarbeitung mit dem Rechner 20, z. B. Mittelwertbildung, Summierung usw. unmittelbar telefonisch an eine Stelle übertragen werden, die vorher über das Tastenfeld 16 angewählt wurde. Bei empfängerseitiger Anordnung entsprechender Analyse- und Auswertegeräte kann, falls erwünscht, eine sofortige Beurteilung der übertragenen Daten stattfinden, so daß anhand des als Sprache rückübertragenen Ergebnisses oder anhand von rückübertragenen Steuersignalen die notwendigen Maßnahmen vom Benutzer des Hörers bzw. automatisch in den gesteuerten Geräten eingeleitet werden können. Ein derartiges Verfahren ist sowohl für einen Arzt zur Rückfrage über bestimmte Patienten bei Hausbesuchen, Visiten, Notfalleinsätzen usw., bei Patienten als auch bei Wartung von Industrie-Anlagen von erheblichem Vorteil, da in kürzester Zeit die erfaßten Daten rechnerisch verarbeitet und telefonisch weitergeleitet werden können, so daß die notwendigen Schritte nach dieser Übermittlung und Rückfrage in Spezialdatenbanken, Giftzentren usw. eingeleitet werden können.

Eine Kombination von Speicherung und Datenübertragung ist ebenfalls möglich, wobei die im Speicher des Hörers 10 gespeicherten Informationen und Daten von einer angewählten Stelle ggfs. mit wesentlich erhöhter Geschwindigkeit abgefragt bzw. empfangen werden können.

Die Ausstattung des Hörers 10 für drahtlosen Empfang bietet weiterhin die Möglichkeit, einen Rundfunkempfänger als Zusatz funkt ions-Modul 30 aufzunehmen, wobei mittels der Speicherfunktion auch eine Zwischenspeicherung für eine verzögerte Wiedergabe möglich wäre. Zu denken ist auch an die Aussendung eines Notsignals in Bergnot etc. ggfs. verbunden mit einer Ortsbestimmung etwa über Satelliten. Die Speicherfunktion, insbesondere bei auswechselbarem Aufzeichnungsmedium, gestattet ferner den sofortigen Zugriff auf beliebige benötigte Informationen, die auf dem Aufzeichnungsmedium gespeichert sind, wie medizinische Diagnose-Informationen, Arzneimittel informationen, technische Informationen, betriebswirtschaftliche Informationen, Lexika- und übersetzungsinformationen.

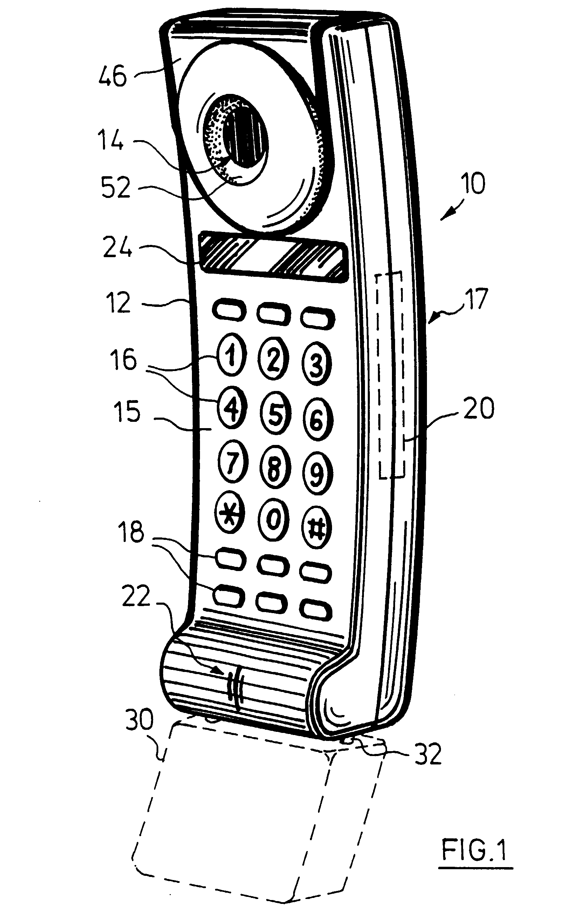

Bei entsprechender Vergrößerung der Anzeige 24 (Fig. 1) bzw. 25 (Fig. 3) zu einem Minibildschirm auf LCD-Basis bzw. bei Ausbildung eines ansteckbaren Moduls 30 als eine derartige Anzeige, ist auch ein Fernsehempfang möglich, oder auch eine Verwendung als Spielcomputer. Weitere Module 30, die an den Hörer 10 ansetzbar sein können, wären ein Druckmodul zur Ausgabe von drahtlos empfangenen bzw. von Instrumenten und Geräten aufgenommenen Daten, einschließlich des Schriftausdrucks von Spracheingabe, ferner ein Minifacsimilegerät oder ein Mini-CD-Plattenspieler. Ferner ist zu denken an ein Kameramodul zum bildlichen Festhalten wichtiger Situationen, etwa bei Unfällen oder ein in Art eines Handscanners zum Abtasten gedruckter Informationen und anschließender Weitergabe über das Fernsprechnetz.

Auf ähnlichem Gebiet liegt eine im Steck-Modul 30 integrierte Zusatz funktion, bei der der Ultraschall zur Abstandsmessung etwa auf Baustellen verwendet wird oder bei der der Hörer 10 als Alarmanlage dient, nämlich bei Hinterlassen im Kraftwagen und Ansprechen auf entsprechende Erschütterungen bei Einbruch oder bei Überfall.

Es sei darauf hingewiesen, daß zwar eine größere Anzahl von Zusatzfunktionen beschrieben wurde, die einzeln oder in Kombination miteinander im Zusammenhang mit der Erfindung anwendbar sind. Die Erfindung ist jedoch nicht auf die beschriebenen Zusatzfunktionen beschränkt, da der Fachmann bei Kenntnis der Erfindung weitere Möglichkeiten erkennen wird, die ebenfalls zur Erfindung zu rechnen sind.

Die vorstehenden Ausführungen machen deutlich, wie durch die vielfältigsten Zusatzfunktionen der drahtlose Telefonhörer 10 in einer Weise ausgestattet werden kann, die dem Benutzer erhebliche Vorteile bietet. Als erstes bleibt die Mobilität auch in Fällen gewahrt, wo heute üblicherweise diese Zusatzfunktionen nur in Geräten enthalten sind, die ortsfest betrieben werden. Zweitens ist es für den Benutzer nicht mehr notwendig, für jede Zusatz funktion ein eigenes Gerät mit sich herumzutragen, wie beispielsweise einen Taschenrechner, einen Türöffner, einen Rundfunkempfänger, etc., etc. Drittens ergibt sich eine Mehrfach-Verwendung der Bauelemente, insbesondere eine gemeinsame Stromversorgung für alle Zusatzfunktionen und ein gemeinsames Tastenfeld und Anzeigefeld, was den Geräteaufwand und vor allem den Platzbedarf und das Gewicht für jede Zusatz funktion erheblich verringert. Viertens ergeben sich aufgrund der Zusatzfunktionen Möglichkeiten des Informationsaustausches und der Informationsbeschaffung und -verwertung, die weit über das Übliche hinausgehen, wie die zuvor beschriebene Blitzdiagnose bei Patienten-Hausbesuchen des Arztes oder bei Maschinenanlagen-Wartung bzw. Reparatur.

Abschließend sei noch bemerkt, daß die konstruktive und schaltungsmäßige Ausgestaltung der einzelnen Zusatzfunktionen dem Fachmann bei Kenntnis der Erfindung durchaus möglich ist, da diese Zusatzfunktionen als solche, allerdings in jeweils getrennten Geräten, bekannt sind. Es scheint deshalb nicht erforderlich, auf derartige Einzelheiten einzugehen. Abhängig von der Anzahl der Zusatzfunktionen kann für die Steuerung eine verhältnismäßig einfache Schaltung dienen bzw. es wird ein Mikroprozessor verwendet, der zugleich den Zentralprozessor für den Rechner 20 bildet.

Gemäß einem weiteren Merkmal der Erfindung ist im oberen Bereich des Hörers 10 ein Clip 46 angeordnet, mit dem der Hörer 10 an einer beliebigen Stelle eines Kleidungsstücks eingehängt und sicher gehalten werden kann. Als Beispiel wäre dabei zu nennen ein Gürtel oder auch eine sehr kleine Tasche, eine Schlaufe, usw.. Ein derartiger Clip 46 soll möglichst wenig über die Außenkontur des Hörers 10 überstehen.

Gemäß der Erfindung ist der Clip 46 deshalb winkelförmig ausgebildet mit einem kurzen Schenkel 48, der sich entlang der oberen Seite des Hörers 10 erstreckt und im wesentlichen die obere Querwand 49 des Gehäuses 12 bildet, und einem längeren Schenkel 50, der den Bereich der Hörmuschel 14 überdeckt. Dieser längere Schenkel ist deshalb mit einer zentralen Öffnung 52 versehen, die gerade die Schallöffnung der Hörmuschel 14 freigibt und sonst kreisscheibenförmig ausgebildet ist, so daß sich eine gute Anlage am Ohr des Benutzers ergibt. Der Clip 46 ist um einen Stift schwenkbar, der durch die gegenüberliegenden Seitenwände des Hörers 10 und eine Bohrung (nicht näher dargestellt) im kurzen Schenkel 48 des Clips 46 geführt ist.

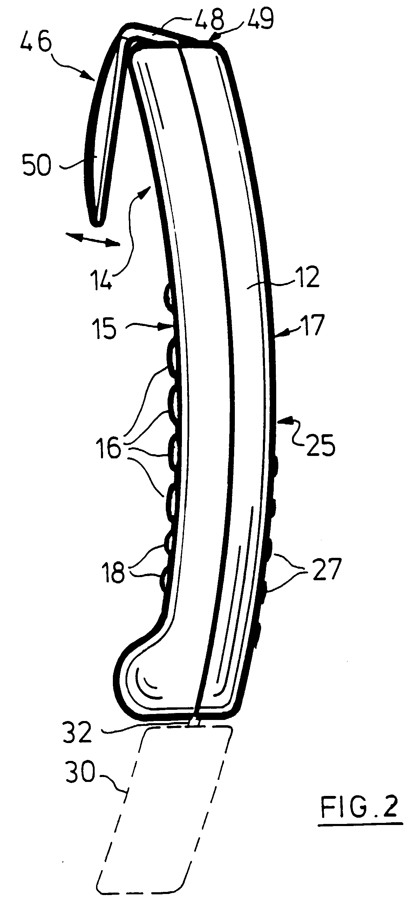

Eine Feder etwa in Form einer Schraubenfeder oder einer Blattfeder ist zwischen das Gehäuse 12 und den Clip 46 gespannt, wobei die Enden der Feder sich derart am Gehäuse 12 bzw. am Schenkel 48 des Clips 46 abstützen, daß der Clip 46 in Fig. 2 entgegen dem Uhrzeigersinn geschwenkt und sein abgewinkelter längerer Schenkel 50 fest gegen die Oberfläche der Hörmuschel 14 gedrückt wird.

Der Clip 46 läßt sich durch leichten Fingerdruck auf das hintere Ende des kurzen Schenkels 48 im Uhrzeigersinn in die gezeigte Position (Fig. 2) schwenken, so daß sich zwischen dem langen Schenkel 50 und der Hörmuschel 14 eine V-förmige Öffnung ergibt, über die der Hörer 10 etwa am Gürtel oder einer Tasche sicher festgeklemmt werden kann.

In besonders vereinfachter Ausführung könnte der Clip 46 auch nur aus dem längeren Schenkel 50 bestehen, dessen Oberkante an der Querkante des Hörers 10 befestigt ist und der sich in sehr geringem Abstand parallel zur Hörmuschel 44 erstreckt. Hierbei kann der Schenkel 50 im Bereich seiner Öffnung 52 bei Benutzung an der Hörmuschel 14 anliegen, so daß der Schall aus der Hörmuschel 14 ungehindert austreten kann.

## Patentansprüche

1. Drahtloses Komforttelefon mit einem Hörer (10), der ein Gehäuse (12), Eingabevorrichtungen zur Telefonnummereingabe in Form eines Tastenfeldes (16), eine akustische Wiedergabevorrichtung (14) und eine Spracheingabevorrichtung (22) aufweist, wobei im Hörer (10) eine Zusatz-Vorrichtung zur Informationsverarbeitung in Form eines Rechners (20) integriert ist, der über eine Bedienvorrichtung (16, 18, 27) an einer der Breitseiten (15, 17) des Hörers (10) bedienbar ist, dadurch gekennzeichnet, daß wenigstens eine Zusatzfunktionsvorrichtung in einem gekapselten Modul (30; 40) untergebracht ist, das an den Hörer (10) in Fortsetzung der Längserstreckung des Gehäuses (12) ansteckbar ist und einen Querschnitt aufweist, der annähernd demjenigen des Gehäuses (12) entspricht.

2. Telefon nach Anspruch 1, dadurch gekennzeichnet, daß der Rechner (20) über die zur Telefonnummereingabe vorhandene Eingabevorrichtung (16) bedienbar ist.

3. Telefon nach Anspruch 1, dadurch gekennzeichnet, daß der Rechner (20) über Tasten (27) an der Rückseite (17) des Hörers (10) bedienbar ist.

4. Telefon nach Anspruch 2 oder 3, dadurch gekennzeichnet, daß die Bedienvorrichtung neben dem Tastenfeld (16) mehrere Multifunktionstasten (18) aufweist.

5. Telefon nach einem der vorhergehenden Ansprüche, dadurch gekennzeichnet, daß das Gehäuse (12) des Hörers (10) gewölbt ist, wobei die Rückseite (17) konvex ausgebildet ist.

6. Telefon nach einem der vorhergehenden Ansprüche, dadurch gekennzeichnet, daß eine Zusatzfunktionsvorrichtung (40) eine ausklappbare Solarzellen-Vorrichtung (42) ist.

7. Telefon nach einem der vorhergehenden Ansprüche, dadurch gekennzeichnet, daß eine Zusatzfunktionsvorrichtung (30, 40) eine Speichervorrichtung zur Datenaufzeichnung oder Zwischenspeicherung für drahtlosen Informations- bzw. Datenabruf ist.

8. Telefon nach einem der vorhergehenden Ansprüche, dadurch gekennzeichnet, daß eine Zusatzfunktionsvorrichtung (30, 40) eine Datenfernübertragungseinrichtung, insbesondere ein Modem aufweist.

9. Telefon nach einem der vorhergehenden Ansprüche, dadurch gekennzeichnet, daß eine Zusatzfunktionsvorrichtung (30, 40) ein Rundfunk- und/oder Fernsehempfänger ist.

10. Telefon nach einem der vorhergehenden Ansprüche, dadurch gekennzeichnet, daß eine Zusatzfunktionsvorrichtung (30, 40) eine Druck- oder Facsimileeinrichtung ist.

11. Telefon nach einem der vorhergehenden Ansprüche, dadurch gekennzeichnet, daß eine Zusatzfunktionsvorrichtung (30, 40) eine photographische Aufnahmeeinrichtung ist.

12. Telefon nach einem der vorhergehenden Ansprüche, dadurch gekennzeichnet, daß eine Zusatzfunktionsvorrichtung (30, 40) eine Fernbediensteuereinrichtung beispielsweise zur Türöffnung oder Geräteschaltung ist.

13. Telefon nach einem der vorhergehenden Ansprüche, dadurch gekennzeichnet, daß eine Zusatzfunktionsvorrichtung (30, 40) eine Alarmeinrichtung ist.

14. Telefon nach einem der vorhergehenden Ansprüche, dadurch gekennzeichnet, daß eine Zusatzfunktionsvorrichtung (30, 40) eine funkgesteuerte Uhr ist.

15. Telefon nach einem der vorhergehenden Ansprüche, dadurch gekennzeichnet, daß eine Zusatzfunktionsvorrichtung (30, 40) ein vom Rechner (20) gesteuerter Terminplaner ist.

16. Telefon nach einem der vorhergehenden Ansprüche, dadurch gekennzeichnet, daß eine Zusatzfunktionsvorrichtung (30, 40) ein Notrufsignalsender ist.

17. Telefon nach einem der vorhergehenden Ansprüche, dadurch gekennzeichnet, daß eine Zusatzfunktionsvorrichtung (30, 40) ein Spielcomputer ist.

18. Telefon nach einem der vorhergehenden Ansprüche, dadurch gekennzeichnet, daß eine Zusatzfunktionsvorrichtung (30, 40) eine Abstands-Meßvorrichtung ist.

19. Telefon nach einem der vorhergehenden Ansprüche, dadurch gekennzeichnet, daß die Eingabe von Daten und Steuerinformationen mittels Sprache erfolgt.

20. Telefon nach einem der vorhergehenden Ansprüche, dadurch gekennzeichnet, daß die Ausgabe von Daten und Steuerinformationen an einer Anzeigevorrichtung (24, 25) erfolgt.

21. Telefon nach Anspruch 20, dadurch gekennzeichnet, daß eine einzige Multifunktions-Anzeige (24) für den Telefon- und Rechnerbetrieb vorgesehen ist.

22. Telefon nach einem der vorhergehenden Ansprüche, gekennzeichnet durch eine Zentralstation mit einer Mehrfach-Akkumulatorladevorrichtung.

23. Telefon nach einem der vorhergehenden Ansprüche, gekennzeichnet durch einen schwenkbaren Clip (46) am oberen Bereich des Hörers (10).

24. Telefon nach Anspruch 23, dadurch gekennzeichnet, daß der Clip (46) winkelförmig ausgebildet ist, der mit einem Schenkel (48) die obere Querwand (49) des Hörers (10) bildet und der andere Schenkel (50) im Bereich der Hörmuschel (14) vorgesehen ist.

25. Telefon nach Anspruch 24, dadurch gekennzeichnet, daß im Bereich der Hörmuschel (14) eine kreisförmige zentrale öffnung (52) im Clip (46) vorgesehen ist.

26. Modul zur Verwendung mit einem drahtlosen Telefon insbesondere nach einem der Ansprüche 1 bis 25, dadurch gekennzeichnet, daß das Modul (30, 40) bis auf Steckkontakte (32) vollständig gekapselt ist und von der Bedienvorrichtung (16, 18, 27) aus gesteuert ist, sowie von der Stromversorgung des Hörers (10) aus gespeist wird.

27. Modul nach Anspruch 26, dadurch gekennzeichnet, daß wenigstens zwei Module (30, 40) untereinander zu einer Einheit gekoppelt sind.

## Claims

1. Convenient cordless telephone comprising a receiver (10) which has a housing (12), input devices for inputting telephone numbers in the form of dialling keys (16), an acoustic reproduction device (14) and a voice input device (22), in which an additional device for information processing in the form of a calculator (20) is integrated into the receiver (10) and can be operated via operating means (16, 18, 27) on one of the broad sides (15, 17) of the receiver (10),
characterized in that
at least one additional function device is housed in an encapsulated module (30; 40) which can be plugged into the receiver (10) as a continuation of the longitudinal extent of the housing (12) and has a cross section which corresponds approximately to that of the housing (12).

2. Telephone according to claim 1, characterized in that the calculator (20) can be operated via the input device (16) provided for inputting telephone numbers.

3. Telephone according to claim 1, characterized in that the calculator (20) can be operated via keys (27) on the rear (17) of the receiver (10).

4. Telephone according to claim 2 or 3, characterized in that the control device has several multi-function keys (18) in addition to the dialling keys (16).

5. Telephone according to any of the preceding claims, characterized in that the housing (12) of the receiver (10) is curved, the rear (17) being formed in a convex shape.

6. Telephone according to any of the preceding claims, characterized in that one additional function device (40) is a swing-out solar cell device (42).

7. Telephone according to any of the preceding claims, characterized in that one additional function device (30, 40) is a memory device for data recording or intermediate storage for cordless information or data retrieval, respectively.

8. Telephone according to any of the preceding claims, characterized in that one additional function device (30, 40) has a remote data transmission device, in particular a modem.

9. Telephone according to any of the preceding claims, characterized in that one additional function device (30, 40) is a broadcast and/or television receiver.

10. Telephone according to any of the preceding claims, characterized in that one additional function device (30, 40) is a printer or facsimile machine.

11. Telephone according to any of the preceding claims, characterized in that one additional function device (30, 40) is a photographic recording device.

12. Telephone according to any of the preceding claims, characterized in that one additional function device (30, 40) is a remote control device, e. g. for opening doors or switching equipment.

13. Telephone according to any of the preceding claims, characterized in that one additional function device (30, 40) is an alarm device.

14. Telephone according to any of the preceding claims, characterized in that one additional function device (30, 40) is a radio-controlled clock.

15. Telephone according to any of the preceding claims, characterized in that one additional function device (30, 40) is an appointment book controlled by the calculator (20).

16. Telephone according to any of the preceding claims, characterized in that one additional function device (30, 40) is a distress signal transmitter.

17. Telephone according to any of the preceding claims, characterized in that one additional function device (30, 40) is a games computer.

18. Telephone according to any of the preceding claims, characterized in that one additional function device (30, 40) is a rangefinder.

19. Telephone according to any of the preceding claims, characterized in that the input of data and control information is effected by voice.

20. Telephone according to any of the preceding claims, characterized in that the output of data and control information is effected on a display device (24, 25).

21. Telephone according to claim 20, characterized in that a single multi-function display (24) is provided for the telephone and calculator operation.

22. Telephone according to any of the preceding claims, characterized by a master station with a multiple cell loading device.

23. Telephone according to any of the preceding claims, characterized by a pivoted clip (46) in the upper region of the receiver (10).

24. Telephone according to claim 23, characterized in that the clip (46) has an angular design and forms the upper transverse wall (49) of the receiver (10) via one arm (48) and the other arm (50) is provided in the region of the ear piece (14).

25. Telephone according to claim 24, characterized in that a circular central opening (52) is provided in the clip (46) in the region of the ear piece (14).

26. Module for use with a cordless telephone, in particular according to any of claims 1 to 25, characterized in that the module (30, 40) is completely encapsulated, except for the plug-in contacts (32), and is controlled from the operating means (16, 18, 27) and is supplied by the power supply of the receiver (10).

27. Module according to claim 26, characterized in that at least two modules (30, 40) are coupled together to form one unit.

## Revendications

1. Appareil téléphonique de confort sans fil, comprenant un écouteur (10) qui comporte un boîtier (12), des éléments d'entrée pour composer un numéro de téléphone, sous la forme d'un groupe de touches (16), un dispositif de reproduction acoustique (14) et un dispositif de saisie de la parole (22), et dans l'écouteur (10) est intégré un dispositif additionnel pour le traitement des informations, sous forme d'un calculateur (20) qui peut être actionné au moyen d'un dispositif d'actionnement (16, 18, 27) sur l'un des grands côtés (15, 17) de l'écouteur (10), caractérisé en ce que dans un module encapsulé (30 ; 40) est logé au moins un dispositif fonctionnel additionnel, ledit module étant susceptible d'être enfiché sur l'écouteur (10) en prolongement de l'extension longitudinale du boîtier (12) et présente une section qui correspond approximativement à celle du boîtier (12).

2. Appareil téléphonique selon la revendication 1, caractérisé en ce que le calculateur (20) peut être actionné par l'intermédiaire des éléments d'entrée (16) prévus pour la composition d'un numéro de téléphone.

3. Appareil téléphonique selon la revendication 1, caractérisé en ce que le calculateur (20) peut être actionné au moyen de touches (27) sur le côté postérieur (17) de l'écouteur (10).

4. Appareil téléphonique selon l'une ou l'autre des revendications 2 et 3, caractérisé en ce que le dispositif d'actionnement comporte, outre le groupe de touches (16) plusieurs touches à fonctions multiples (18).

5. Appareil téléphonique selon l'une quelconque des revendications précédentes, caractérisé en ce que le boîtier (12) de l'écouteur (10) est bombé, et le côté postérieur (17) est réalisé sous forme convexe.

6. Appareil téléphonique selon l'une quelconque des revendications précédentes, caractérisé en ce qu'un dispositif fonctionnel additionnel (40) est un dispositif déployable à cellule solaire (42).

7. Appareil téléphonique selon l'une quelconque des revendications précédentes, caractérisé en ce qu'un dispositif fonctionnel additionnel (30, 40) est un dispositif de mémorisation pour l'enregistrement de données ou la mémorisation intermédiaire pour interrogation d'informations ou de données sans fil.

8. Appareil téléphonique selon l'une quelconque des revendications précédentes, caractérisé en ce qu'un dispositif fonctionnel additionnel (30, 40) comporte un dispositif de télétransmission de données, en particulier un modem.

9. Appareil téléphonique selon l'une quelconque des revendications précédentes, caractérisé en ce qu'un dispositif fonctionnel additionnel (30, 40) est un récepteur de radiodiffusion et/ou de télévision.

10. Appareil téléphonique selon l'une quelconque des revendications précédentes, caractérisé en ce qu'un dispositif fonctionnel additionnel (30, 40) est un dispositif d'impression ou de télécopie.

11. Appareil téléphonique selon l'une quelconque des revendications précédentes, caractérisé en ce qu'un dispositif fonctionnel additionnel (30, 40) est un dispositif d'enregistrement photographique.

12. Appareil téléphonique selon l'une quelconque des revendications précédentes, caractérisé en ce qu'un dispositif fonctionnel additionnel (30, 40) est un dispositif de télécommande, par exemple pour l'ouverture de portes ou pour la commutation d'appareils.

13. Appareil téléphonique selon l'une quelconque des revendications précédentes, caractérisé en ce qu'un dispositif fonctionnel additionnel (30, 40) est un dispositif d'alarme.

14. Appareil téléphonique selon l'une quelconque des revendications précédentes, caractérisé en ce qu'un dispositif fonctionnel additionnel (30, 40) est une horloge radio-commandée.

15. Appareil téléphonique selon l'une quelconque des revendications précédentes, caractérisé en ce qu'un dispositif fonctionnel additionnel (30, 40) est un dispositif planificateur commandé par le calculateur (20).

16. Appareil téléphonique selon l'une quelconque des revendications précédentes, caractérisé en ce qu'un dispositif fonctionnel additionnel (30, 40) est un émetteur de signaux de secours.

17. Appareil téléphonique selon l'une quelconque des revendications précédentes, caractérisé en ce qu'un dispositif fonctionnel additionnel (30, 40) est un ordinateur de jeu.

18. Appareil téléphonique selon l'une quelconque des revendications précédentes, caractérisé en ce qu'un dispositif fonctionnel additionnel (30, 40) est un dispositif de mesure de distance.

19. Appareil téléphonique selon l'une quelconque des revendications précédentes, caractérisé en ce que l'entrée de données et d'informations de commande a lieu au moyen de la parole.

20. Appareil téléphonique selon l'une quelconque des revendications précédentes, caractérisé en ce que la sortie de données et d'informations de commande a lieu au moyen d'un dispositif d'affichage (24, 25).

21. Appareil téléphonique selon la revendication 20, caractérisé en ce qu'il est prévu un affichage unique à fonctions multiples (24) pour le fonctionnement en téléphone et pour le fonctionnement en calculateur.

22. Appareil téléphonique selon l'une quelconque des revendications précédentes, caractérisé par une station centrale avec un dispositif de chargement d'accumulateur à plusieurs postes.

23. Appareil téléphonique selon l'une quelconque des revendications précédentes, caractérisé par une pince basculante (46) à la région supérieure de l'écouteur (10).

24. Appareil téléphonique selon la revendication 23, caractérisé en ce que la pince (46) est réalisée sous forme d'équerre, qui forme par l'un de ses bras (48) la paroi transversale supérieure (49) de l'écouteur (10), et dont l'autre bras (50) est prévu dans la région du pavillon de l'écouteur (14).

25. Appareil téléphonique selon la revendication 24, caractérisé en ce qu'il est prévu dans la pince (46) une ouverture centrale circulaire (52) dans la région du pavillon de l'écouteur (14).

26. Module destiné à être utilisé avec un appareil téléphonique sans fil, en particulier selon l'une quelconque des revendications 1 à 25, caractérisé en ce que le module (30, 40) est entièrement encapsulé, à l'exception de contacts à enfichage (32), qu'il est commandé depuis le dispositif d'actionnement (16, 18, 27), et qu'il est alimenté depuis l'alimentation électrique de l'écouteur (10).

27. Module selon la revendication 26, caractérisé en ce qu'au moins deux modules (30, 40) sont accouplés l'un au-dessous de l'autre pour former une unité.
